# FASCICULE DE BREVET EUROPEEN

(11) **EP 1 977 181 B1**
(45) Date de publication et mention de la délivrance du brevet: **03.06.2009**
(21) Numéro de dépôt: 07731519.0
(22) Date de dépôt: 25.01.2007
(51) Int. Cl.: F28D 15/02

(54) **PROCEDE DE FABRICATION DE PANNEAUX A CALODUCS ET/OU INSERTS INTEGRES MAINTENUS PAR DES LANGUETTES**
VERFAHREN ZUR HERSTELLUNG VON PANEELEN MIT INTEGRIERTEN HEIZUNGSROHREN UND ODER EINSÄTZEN, DIE VON ZUNGEN GEHALTEN WERDEN
METHOD OF MANUFACTURING PANELS HAVING INTEGRATED HEAT PIPES AND/OR INSERTS RETAINED BY TONGUES

(30) Priorité: 25.01.2006 FR 0650255
(43) Date de publication de la demande: 08.10.2008
(73) Titulaire: THALES, 92200 Neuilly sur Seine (FR)
(72) Inventeur: MAUDUIT, Daniel, F-83600 Frejus (FR)
(74) Mandataire: Esselin, Sophie
(86) Numéro de dépôt international: PCT/FR2007/050691
(87) Numéro de publication internationale: WO 2007/085767

(56) Documents cités:
- US-A- 4 880 052
- US-A- 5 168 921

## Description

L'invention concerne les panneaux à caloduc(s) et/ou insert(s) intégrés, et plus précisément les procédés de fabrication de tels panneaux.

On entend ici par « panneau à caloduc(s) et/ou insert(s) intégrés » un panneau comportant des semelles dites inférieure et supérieure entre lesquelles sont immobilisés des caloducs et/ou des inserts (par exemple deux ou trois, comme trente ou quarante) séparés les uns des autres par des structures intercalaires, généralement de type nid d'abeille (ou « Nida »). Par ailleurs, on entend ici par « insert » un bloc, par exemple en aluminium, servant de point de fixation pour des équipements installés ultérieurement.

Comme le sait l'homme de l'art, la fabrication de tels panneaux peut se faire au moyen de deux procédés comportant de nombreuses étapes, et à partir d'une tôle plane (ou marbre de cuisson), de semelles inférieure et supérieure, de caloduc(s) (ou « heat pipe(s) ») et/ou d'insert(s), de broches et de structures intercalaires.

Le premier procédé consiste tout d'abord à traiter les broches afin de les revêtir intégralement d'un matériau permettant leur démoulage. Puis, il faut placer la semelle inférieure sur la tôle plane et l'enduire d'une couche de colle. Puis, il faut positionner les structures intercalaires en des endroits choisis, de manière à définir des zones d'accueil de caloduc ou d'insert. Puis, il faut positionner les caloducs et/ou les inserts dans les zones d'accueil entre les structures intercalaires. Puis, il faut remplir une partie de l'espace libre entre les caloducs et/ou les inserts et les structures intercalaires d'une colle de type intumescente. Puis, il faut placer la semelle supérieure (ou une tôle auxiliaire) au dessus des caloducs et/ou des inserts et des structures intercalaires et au contact de ces derniers, après enduction de la face inférieure de la semelle supérieure avec une couche de colle. Puis, il faut introduire les broches traitées au travers de la semelle supérieure (ou de la tôle auxiliaire) de sorte qu'elles soient placées dans les espaces contenant la colle intumescente de part et d'autre des faces latérales des caloducs et/ou des inserts. Puis, il faut passer l'ensemble (y compris le marbre de cuisson) dans un four ou un autoclave pendant une durée choisie, de manière à provoquer une polymérisation du panneau. Puis, il faut démouler. Puis, il faut extraire les broches. Et finalement, il faut nettoyer les broches.

On notera qu'en cas d'utilisation d'une tôle auxiliaire il faut ensuite retirer cette dernière en collant une semelle supérieure finale dite « semelle de vol » (l'utilisation d'une tôle auxiliaire permet de vérifier l'expansion de la colle intumescente sans avoir à effectuer des radiographies sous rayons X).

Le second procédé consiste tout d'abord à traiter les broches afin de les revêtir intégralement d'un matériau permettant leur démoulage. Puis, il faut positionner des broches traitées dans des endroits choisis du marbre de cuisson, correspondant aux zones d'accueil des caloducs ou des inserts sur la semelle inférieure. Puis; il faut placer la semelle inférieure, préalablement enduite de colle, sur la tôle plane de sorte qu'elle soit traversée par les broches. Puis, il faut positionner les structures intercalaires entre les alignements de broches en dehors des zones d'accueil de caloduc ou d'insert. Puis, il faut positionner les caloducs ou les inserts dans leurs zones d'accueil entre les alignements de broches. Puis, il faut remplir d'une colle de type intumescente l'espace libre entre les caloducs et/ou les inserts et les structures intercalaires. Puis, il faut placer la semelle supérieure (ou une tôle auxiliaire) au dessus des caloducs et/ou des inserts et des structures intercalaires et au contact de ces derniers, après une éventuelle enduction de la face inférieure de la semelle supérieure avec une couche de colle. Puis, il faut passer l'ensemble (y compris le marbre de cuisson) dans un four ou un autoclave pendant une durée choisie, de manière à provoquer une polymérisation du panneau. Puis, il faut démouler en séparant précautionneusement le panneau des broches solidarisées au marbre de cuisson. Et finalement, il faut nettoyer les broches.

Ce second procédé est actuellement préféré lorsque la tolérance de positionnement des caloducs et/ou des inserts est petite (typiquement de l'ordre du millimètre). Mais, il trouve vite ses limites dès lors que le nombre de caloducs et/ou d'inserts est important et que les dimensions du panneau sont grandes.

Quel que soit le procédé utilisé, le nombre d'étapes à enchaîner s'avère trop important et l'extraction des broches hors du panneau s'avère difficile, voire parfois quasi-impossible en raison de l'action de la colle sur des parties des broches ou des logements de celles-ci où la protection peut être endommagée lors des manipulations et/ou qui sont mal protégés. Il est certes possible d'améliorer la situation en utilisant par exemple des broches coniques et/ou des trous comportant un méplat, mais, cela augmente les coûts sans pour autant limiter le nombre d'étapes à enchaîner.

Aucun procédé connu n'apportant une entière satisfaction, l'invention a donc pour but d'améliorer la situation en proposant un procédé de fabrication ne nécessitant pas l'utilisation de broches, tout en conservant la précision de positionnement des caloducs et/ou des inserts (voire même l'améliorant pour qu'elle devienne inférieure ou égale à 1 mm), et en offrant la possibilité d'intégrer une grande quantité de caloducs et/ou d'inserts, typiquement de trente à quarante, voir même plus.

Elle propose à cet effet un procédé de fabrication de panneau(x) à caloduc(s) et/ou insert(s) intégrés, consistant à :
a) prévoir une semelle inférieure comportant, en des endroits choisis situés de part et d'autre de zones d'accueil de caloduc et/ou d'insert, des languettes, sensiblement planes et pouvant être redressées au-dessus de sa face supérieure,
b) redresser partiellement les languettes en direction des zones d'accueil,
c) positionner les caloducs et/ou les inserts dans chaque zone d'accueil, entre les languettes et au contact de la face supérieure de la semelle inférieure,
d) terminer le redressement des languettes afin qu'elles soient plaquées contre des faces latérales des caloducs et/ou des inserts,
e) déposer une épaisseur choisie d'une (première) colle contre les faces latérales des caloducs et/ou des inserts,
f) positionner des structures intercalaires, sensiblement de même hauteur que celle des caloducs et/ou des inserts, de part et d'autre des faces latérales de chaque caloduc et/ou insert et au contact de la face supérieure de la semelle inférieure,
g) placer une semelle supérieure au-dessus des caloducs et/ou des inserts et des structures intercalaires et au contact de ces derniers.

Le procédé selon l'invention peut comporter d'autres caractéristiques qui peuvent être prises séparément ou en combinaison, et notamment :
- à l'étape c) on peut placer la semelle inférieure sur une tôle (ou marbre de cuisson) de planéité choisie, avant de procéder au positionnement des caloducs et/ou des inserts ;
- à l'étape b) on peut enduire la face supérieure de la semelle inférieure d'une couche d'une (seconde) colle, avant ou après avoir redressé partiellement les languettes;
- à l'étape g), avant de placer la semelle supérieure, on peut enduire sa face inférieure (destinée à être au contact des caloducs et/ou des inserts et des structures intercalaires), d'une couche de la (seconde) colle ;
- à l'étape b) on peut redresser partiellement les languettes afin qu'elles fassent un angle, par rapport à la face supérieure de la semelle inférieure, choisi dans un intervalle compris entre environ 15° et environ 45°. Par exemple, on peut choisir un angle d'environ 30° ;
- les languettes peuvent être définies dans la semelle inférieure au moyen d'une technique choisie parmi l'usinage, la découpe laser, la découpe par jet de fluide, et l'emboutissage ;
- en variante, les languettes peuvent être rapportées sur la face supérieure de la semelle inférieure ;
- à l'étape c) on peut placer un cadre de bordure sur la tôle (ou marbre de cuisson), puis placer la semelle inférieure dans le cadre de bordure ;
- après l'étape g) il peut comprendre une étape h) consistant à passer le panneau assemblé dans un four ou un autoclave ;
- après l'étape h) il peut comprendre une étape i) consistant à démouler le panneau assemblé afin de le séparer du marbre de cuisson ;
- on peut utiliser des structures intercalaires de type nid d'abeille ;
- on peut utiliser une (première) colle de type intumescente.

L'invention propose également un panneau à caloduc(s) et/ou insert(s) intégrés réalisé au moyen d'un procédé de fabrication du type de celui présenté ci-avant.

L'invention est particulièrement bien adaptée, bien que de façon non exclusive, aux panneaux à caloduc(s) et/ou insert(s) intégrés destinés à être implantés sur des engins spatiaux, comme par exemple des satellites. Mais, elle concerne également d'autres domaines d'application, comme par exemple l'aéronautique ou l'automobile, dès lors qu'un caloduc ou un insert doit être intégré dans un panneau (ou « sandwich métallique»).

Les dessins annexés decrivent des modes de réalisation de l'invention:
- la figure 1 illustre de façon très schématique la face supérieure d'une semelle inférieure d'un panneau à caloducs intégrés,
- la figure 2 illustre de façon très schématique, dans une vue en coupe transversale, la semelle inférieure de la figure 1 après redressement partiel des languettes,
- la figure 3 illustre de façon très schématique, dans une vue en coupe transversale, la semelle inférieure de la figure 2, après positionnement sur un marbre de cuisson et après placement des caloducs dans leurs zones d'accueil,
- la figure 4 illustre de façon très schématique, dans une vue en coupe transversale, la semelle inférieure de la figure 2, après positionnement sur un marbre de cuisson, placement des caloducs dans leurs zones d'accueil et après redressement complet des languettes,
- la figure 5 illustre de façon très schématique, dans une vue en coupe transversale, la semelle inférieure de la figure 2, après positionnement sur un marbre de cuisson, placement des caloducs dans leurs zones d'accueil, redressement complet des languettes et placement de la colle intumescente contre les faces latérales des caloducs,
- la figure 6 illustre de façon très schématique, dans une vue en coupe transversale, la semelle inférieure de la figure 2, après positionnement sur un marbre de cuisson, placement des caloducs dans leurs zones d'accueil, redressement complet des languettes, placement de la colle intumescente contre les faces latérales des caloducs et placement des structures intercalaires,
- la figure 7 illustre de façon très schématique, dans une vue en coupe transversale, la semelle inférieure de la figure 2, après positionnement sur un marbre de cuisson, placement des caloducs dans leurs zones d'accueil, redressement complet des languettes, placement de la colle intumescente contre les faces latérales des caloducs, placement des structures intercalaires et placement de la semelle supérieure.

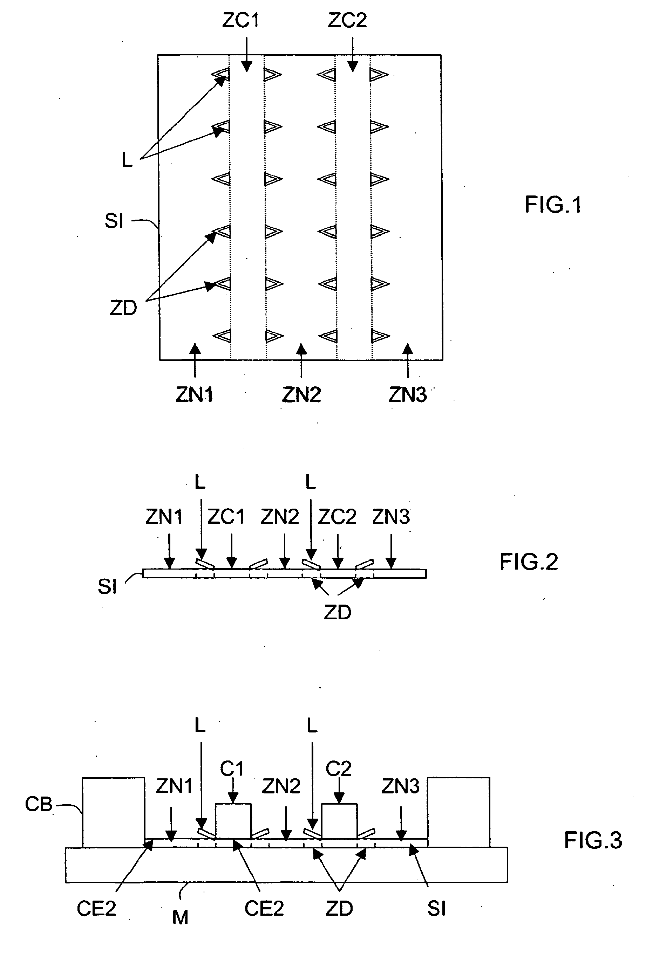

Il est important de noter que sur les figures 1 à 7 les dimensions respectives des différents éléments ne sont pas représentatives de leurs dimensions réelles et relatives.

L'invention a pour objet de permettre la fabrication simplifiée de panneaux à caloduc(s) et/ou insert(s) intégrés, du fait de la non utilisation de broches d'immobilisation.

Dans ce qui suit, on considère à titre d'exemple non limitatif que les panneaux sont à caloducs intégrés et sont destinés à être implantés sur des engins spatiaux, comme par exemple des satellites. Mais, de tels panneaux peuvent ne comprendre que des inserts (à la place des caloducs) ou bien un panachage de caloduc(s) et d'insert(s). En outre, ces panneaux peuvent être implantés sur d'autres équipements ou systèmes, notamment dans les domaines de l'aéronautique et de l'automobile dès lors qu'un caloduc ou un insert doit être intégré dans un panneau. De tels panneaux peuvent présenter n'importe quelle taille, et par exemple 6 m x 5m (la taille limite dépend des dimensions du moyen de polymérisation autoclave, par exemple).

Afin de mettre en oeuvre un procédé selon l'invention, il faut tout d'abord prévoir dans une première étape (a) au moins une semelle inférieure SI, par exemple en aluminium, une semelle supérieure SS, par exemple en aluminium, des caloducs Ci (et/ou des inserts), généralement de forme linéaire (mais pouvant prendre toute autre forme géométrique, comme par exemple en L, U, V ou S), et des structures intercalaires Nj, par exemple de type nid d'abeille (ou « Nida ») en aluminium, présentant une hauteur sensiblement égale à celle des caloducs Ci. Il est également préférable de prévoir une tôle plane (généralement appelée marbre de cuisson) MC, présentant une planéité choisie (typiquement de l'ordre de 0,1 mm pour 100 mm, avec 2 mm de planéité générale).

Dans ce qui suit, les mots inférieur(e) et supérieur(e) désignent systématiquement soit une position par rapport au marbre de cuisson (MC), soit des orientations respectivement vers la face (supérieure) de support du marbre de cuisson (MC) et identique à cette face (supérieure) de support (et donc opposée à celle-ci).

Selon l'invention, et comme illustré sur la figure 1, la semelle inférieure SI comporte des languettes (ou « linguets ») L, sensiblement planes, initialement sensiblement parallèles à sa face supérieure et pouvant être redressées au-dessus de cette dernière.

On entend ici par « languette » tout élément (ou patte ou plot) solidarisé à la semelle inférieure SI et pouvant être entraîné en rotation sur environ 90° par rapport à la surface supérieure de ladite semelle inférieure SI.

Ces languettes peuvent être fabriquées par tout moyen connu de l'homme de l'art. Par exemple, et comme illustré sur la figure 1, elles peuvent être définies dans la semelle inférieure SI par usinage, découpe laser, ou découpe par jet de fluide, ou encore emboutissage. Par exemple, dans le cas d'un usinage elles peuvent être réalisées avec une fraise de 5/10^{ème} de millimètre de diamètre. Dans ce cas, les languettes L sont initialement placées dans des zones de découpe ZD de la semelle inférieure SI.

Dans une variante, les languettes L peuvent être rapportées sur la face supérieure de la semelle inférieure SI. Dans ce cas, elles sont fabriquées séparément, puis solidarisées au niveau des endroits choisis sur la face supérieure de la semelle inférieure SI, par exemple par soudage ou collage.

Dans l'exemple schématique illustré sur la figure 1, les languettes L présentent une forme sensiblement triangulaire (ou en V). Mais cela n'est pas obligatoire. Toute forme susceptible de bloquer (ou caler), une fois redressée, une partie d'une face latérale de caloduc C peut être envisagée, et notamment un demi-rond ou un croissant.

Ces languettes L sont définies en des endroits choisis de la semelle inférieure SI, situés de part et d'autre de zones d'accueil ZCi dans lesquelles doivent être installés les caloducs Ci. En quelque sorte, les languettes L sont placées selon des alignements qui délimitent les bords latéraux des zones d'accueil de caloduc ZCi. Les zones ZNj, de la surface supérieure de la semelle inférieure SI, qui sont placées de part et d'autre des zones d'accueil ZCi des caloducs, sont destinées à recevoir des structures intercalaires (ou Nida) Nj. Dans l'exemple schématique et non limitatif illustré sur les figures 1 à 7, la semelle inférieure SI comporte deux zones d'accueil de caloduc ZC1 et ZC2 (i = 1 et 2) et trois zones de réception de structure intercalaire ZN1 à ZN3 (j = 1 à 3). Mais, les nombres de zones d'accueil de caloduc ZCi et de zones de réception de structure intercalaire ZNj peuvent être bien supérieurs à 2 selon les besoins, par exemple 30 ou 40, voire même 60.

Le nombre de languettes L encadrant chaque zone d'accueil de caloduc ZCi varie en fonction des dimensions et de la géométrie (ou forme) des caloducs. Par exemple on peut en prévoir 6 ou 8, voire même plus, pour chaque caloduc Ci.

Une fois les languettes L définies, la semelle inférieure SI, au moins, peut faire l'objet d'un traitement destiné à favoriser l'adhérence de la colle.

Dans une deuxième étape (b), illustrée sur la figure 2, les languettes L de la semelle inférieure SI sont redressées partiellement en direction des zones d'accueil de caloduc ZCi.

Ce redressement partiel est destiné à permettre le positionnement des caloducs Ci dans leurs zones d'accueil ZCi. Il consiste à entraîner légèrement en rotation toutes les languettes L afin qu'elles fassent un angle choisi par rapport à la face supérieure de la semelle inférieure SI. Lorsque les languettes L ne sont pas rapportées, elles sont donc éloignées de leurs zones de découpe ZD.

L'angle de rotation est par exemple compris entre environ 15° et environ 45°. Par exemple, on peut choisir un angle de rotation d'environ 30° comme cela est schématiquement illustré sur la figure 2.

Dans cette deuxième étape (b), la face supérieure de la semelle inférieure SI peut être éventuellement enduite d'une couche de (seconde) colle CE2, avant ou après que les languettes aient été redressées partiellement. La couche de colle CE2 est par exemple déposée sur la face supérieure sous la forme d'un film de faible épaisseur, typiquement 100 à 150 grammes par m², soit une épaisseur d'environ 0,1 mm. Cette colle CE2 est par exemple de type redux 312.

Dans une troisième étape (c), schématiquement illustrée sur la figure 3, on positionne les caloducs Ci dans leurs zones d'accueil ZCi respectives, c'est-à-dire entre les paires d'alignements de languettes L qui délimitent les zones d'accueil ZCi. Ce positionnement est destiné à mettre la face inférieure des caloducs Ci au contact de la face supérieure de la semelle inférieure SI, en vue de leur immobilisation sur cette dernière du fait de la couche de (seconde) colle CE2.

Afin de renforcer le collage des caloducs Ci sur la face supérieure de la semelle inférieure SI, les caloducs Ci peuvent être également enduits d'une couche de (seconde) colle CE2 avant d'être positionnés dans leurs zones d'accueil ZCi.

Par ailleurs, et comme illustré sur la figure 3, afin de faciliter la fabrication du panneau P, la semelle inférieure SI peut être placée sur la tôle plane (ou marbre de cuisson) MC avant que les caloducs Ci ne soient positionnés dans leurs zones d'accueil ZCi. Dans ce cas, la face inférieure de la semelle inférieure SI repose sur la face supérieure du marbre de cuisson MC.

La fabrication du panneau P peut être encore plus facilitée par le positionnement de la semelle inférieure SI à l'intérieur d'un cadre de bordure CB posé sur la face supérieure du marbre de cuisson MC.

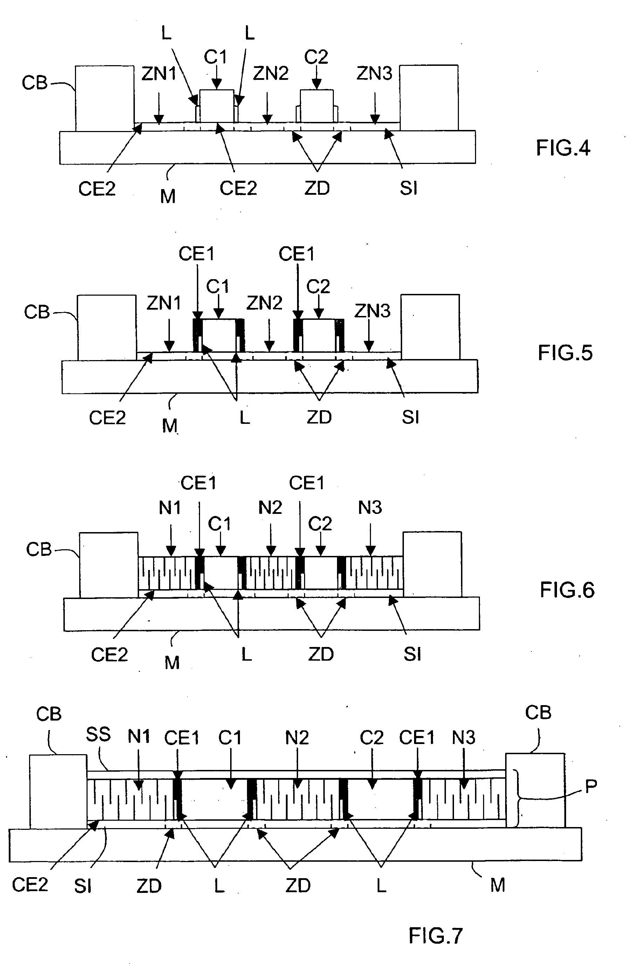

Dans une quatrième étape (d), schématiquement illustrée sur la figure 4, on redresse de nouveau les languettes L afin qu'elles soient plaquées contre les faces latérales des caloducs Ci. A la fin de ce redressement final, l'angle de rotation entre les languettes L et la face supérieure de la semelle inférieure SI est alors sensiblement égal à 90°. Les caloducs Ci sont alors parfaitement positionnés et immobilisés dans leurs zones d'accueil ZCi respectives.

Dans une cinquième étape (e), schématiquement illustrée sur la figure 5, on dépose une couche d'une (première) colle CE1 contre les faces latérales des caloducs Ci et donc également contre les languettes L complètement redressées. Cette couche de (première) colle CE1 présente une épaisseur choisie. Par exemple on choisit une épaisseur d'environ 2 mm (mais, elle peut aussi être plus fine ou plus épaisse selon le type de (première) colle CE1 utilisé).

Cette (première) colle CE1 est de préférence de type intumescente, c'est-à-dire qu'elle se transforme en une mousse adhésive et permet de remplir toutes les cavités formées par le Nida Nj au droit des faces latérales des caloducs Ci. Par exemple, on peut utiliser une colle CE1 de type redux 206.

Dans une sixième étape (f), schématiquement illustrée sur la figure 6, on positionne les structures intercalaires (ou Nida) Nj dans leurs zones de réception ZNj respectives, c'est-à-dire de part et d'autre des faces latérales des caloducs Ci.

Ce positionnement est destiné à mettre la face inférieure des structures intercalaires Nj au contact de la face supérieure de la semelle inférieure SI, en vue de leur immobilisation sur cette dernière du fait de la couche de (seconde) colle dont elle est enduite.

Afin de renforcer le collage des structures intercalaires Nj sur la face supérieure de la semelle inférieure SI, les structures intercalaires Nj peuvent être éventuellement enduites d'une couche de (seconde) colle avant d'être positionnées dans leurs zones de réception ZNj.

Il est important de noter que les cinquièmes (e) et sixièmes (f) étapes pourraient être interverties. Dans ce cas, on positionne d'abord les structures intercalaires Nj dans leurs zones de réception ZNj respectives, puis on dépose la couche de (première) colle CE1 entre les faces latérales des caloducs Ci et des structures intercalaires Nj qui sont en regard.

Dans une septième étape (g), schématiquement illustrée sur la figure 7, on place la semelle supérieure SS au-dessus des faces supérieures des caloducs Ci et des structures intercalaires Nj afin que sa face inférieure soit au contact desdites faces supérieures.

Afin de renforcer l'immobilisation de la semelle supérieure SS par rapport aux caloducs Ci et structures intercalaires Nj, on enduit sa face inférieure d'une couche de (seconde) colle avant de procéder à son placement.

A ce stade, les différents éléments (SI, Ci, L, Nj et SS) constituant un panneau P sont désormais assemblés.

Le procédé peut se poursuivre par une huitième étape (h) dans laquelle on introduit le panneau à caloducs intégrés P, de préférence placé sur le marbre de cuisson MC, dans un four ou un autoclave pendant une durée choisie et sous une pression choisie. Ce passage au four est destiné à provoquer la polymérisation des première et seconde colles (lorsqu'elles sont choisies à cet effet) et donc la solidarisation finale des différents éléments (SI, Ci, L, Nj et SS) du panneau assemblé P les uns aux autres.

Dans ce cas, le procédé s'achève par une neuvième étape (i) de démoulage, destinée à séparer le panneau assemblé P du marbre de cuisson MC.

Le procédé selon l'invention offre un certain nombre d'avantages par rapport aux procédés de la technique antérieure, et notamment :
- la suppression de l'utilisation des broches et donc du traitement initial au démoulant et du nettoyage final de ces dernières, ainsi que l'économie de fabrication de celles-ci,
- la suppression des perçages dans les semelles supérieure, ainsi que dans le marbre de cuisson, pour le passage des broches,
- la suppression des perçages des produits dits d'environnement (comme par exemple le tissu de verre téfloné) utilisé pour assurer un pouvoir anti-adhésif,
- la suppression des étapes d'extraction des broches, lesquelles sont très délicates,
- un positionnement automatique et très précis des caloducs et/ou des inserts et des structures intercalaires,
- l'absence de réservation de zones de pose de la (première) colle intumescente,
- l'utilisation d'un marbre de polymérisation unique quel que soit le type de panneau,
- une unique étape de polymérisation au lieu de deux,
- l'absence de risque d'impossibilité de démoulage.

## Revendications

1. Procédé de fabrication de panneau(x) à caloduc(s) et/ou insert(s) intégrés (P), consistant à a) prévoir une semelle dite inférieure (SI) comportant, en des endroits choisis situés de part et d'autre de zones d'accueil de caloduc ou d'insert (ZCi), des languettes (L) sensiblement planes et propres à être redressées au-dessus d'une face supérieure qu'elle comprend, b) redresser partiellement lesdites languettes (L) en direction desdites zones d'accueil (ZCi), c) positionner lesdits caloducs et/ou lesdits inserts (Ci) dans chaque zone d'accueil (ZCi), entre lesdites languettes (L) et au contact de ladite face supérieure de la semelle inférieure (SI), d) terminer le redressement desdites languettes (L) de sorte qu'elles soient plaquées' contre des faces latérales desdits caloducs et/ou desdits inserts (Ci), e) déposer une épaisseur choisie d'une première colle (CE1) contre lesdites faces latérales des caloducs et/ou des inserts (Ci), f) positionner des structures intercalaires (Nj), sensiblement de même hauteur que celle desdits caloducs et/ou desdits inserts (Ci), de part et d'autre des faces latérales de chaque caloduc et/ou insert (Ci) et au contact de ladite face supérieure de la semelle inférieure (SI), et g) placer une semelle dite supérieure (SS) au-dessus desdits caloducs et/ou inserts (Ci) et desdites structures intercalaires (Nj) et au contact de ces derniers.

2. Procédé selon la revendication 1, dans lequel à l'étape c), avant de procéder au positionnement des caloducs et/ou inserts (Ci), on place ladite semelle inférieure (SI) sur une tôle de planéité choisie (MC).

3. Procédé selon l'une des revendications 1 et 2, dans lequel à l'étape b) on enduit ladite face supérieure de la semelle inférieure (SI) d'une couche d'une seconde colle (CE2), après avoir redressé partiellement lesdites languettes (L).

4. Procédé selon l'une des revendications 1 et 2, dans lequel à l'étape b) on enduit ladite face supérieure de la semelle inférieure (SI) d'une couche d'une seconde colle, avant d'avoir redressé partiellement lesdites languettes (L).

5. Procédé selon l'une des revendications 1 à 4, dans lequel à l'étape g), avant de placer ladite semelle supérieure (SI), on enduit une face inférieure, qu'elle comprend et qui est destinée à être au contact desdits caloducs et/ou inserts (Ci) et desdites structures intercalaires (Nj), d'une couche de ladite seconde colle.

6. Procédé selon l'une des revendications 1 à 5, dans lequel à l'étape b) on redresse partiellement lesdites languettes (L) de sorte qu'elles fassent un angle, par rapport à la face supérieure de la semelle inférieure (SI), choisi dans un intervalle compris entre 15° et 45°.

7. Procédé selon la revendication 6, ledit angle est choisi sensiblement égal à 30°.

8. Procédé selon l'une des revendications 1 à 7, dans lequel lesdites languettes (L) sont définies dans ladite semelle inférieure (SI) au moyen d'une technique choisie dans un groupe comprenant au moins l'usinage, la découpe laser, la découpe par jet de fluide, et l'emboutissage.

9. Procédé selon l'une des revendications 1 à 7, **caractérisé en ce que** lesdites languettes (L) sont rapportées sur la face supérieure de ladite semelle inférieure (SI).

10. Procédé selon l'une des revendications 2 à 9, dans lequel à l'étape c), on place un cadre de bordure (CB) sur ladite tôle de planéité choisie (MC), puis on place ladite semelle inférieure (SI) dans ledit cadre de bordure (CB).

11. Procédé selon l'une des revendications 1 à 10, avec une étape h), après l'étape g), dans laquelle on passe le panneau assemblé (P) dans un four ou un autoclave.

12. Procédé selon la revendication 11, avec une étape i), après l'étape h), dans laquelle on démoule le panneau assemblé (P) afin de le séparer de ladite tôle de planéité choisie (MC).

13. Procédé selon l'une des revendications 1 à 12, dans lequel on utilise des structures intercalaires (Nj) de type nid d'abeille.

14. Procédé selon l'une des revendications 1 à 13, dans lequel on utilise une première colle de type intumescente.

15. Panneau à caloduc(s) et/ou les insert(s) intégrés (P) réalisé au moyen d'un procédé de fabrication selon l'une des revendications précédentes.

16. Panneau selon la revendication 15 étant propre à être implanté sur un engin spatial.

## Claims

1. Method for fabricating panel(s) having built-in heat pipe(s) and/or insert(s) (P), consisting in a) providing a plate called bottom plate (SI) comprising, in selected places on either side of the heat pipe or insert accommodation zones (ZCi), tabs (L) which are substantially flat and suitable for being straightened above an upper face which it comprises, b) partially straightening said tabs (L) toward said accommodation zones (ZCi), c) positioning said heat pipes and/or said inserts (Ci) in each accommodation zone (ZCi) between said tabs (L) and in contact with said upper face of the bottom plate (SI), d) terminating the straightening of said tabs (L) so that they are pressed against the side faces of said heat pipes and/or said inserts (Ci), e) depositing a selected thickness of a first adhesive (CE1) against said side faces of the heat pipes and/or the inserts (Ci), f) positioning separating structures (Nj), substantially having the same height as that of said heat pipes and/or said inserts (Ci), on either side of the side faces of each heat pipe and/or insert (Ci) and in contact with said upper face of the bottom plate (SI), and g) placing a plate called upper plate (SS) above said heat pipes and/or inserts (Ci) and said separating structures (Nj) and in contact therewith.

2. Method according to Claim 1, in which in step c), before positioning the heat pipes and/or inserts (Ci), said bottom plate (SI) is placed on a plate having a selected planeity (MC).

3. Method according to either of Claims 1 and 2, in which in step b), said upper face of the bottom plate (SI) is coated with a layer of a second adhesive (CE2), after having partially straightened said tabs (L).

4. Method according to either of Claims 1 and 2, in which in step b), said upper face of the bottom plate (SI) is coated with a layer of a second adhesive, before having partially straightened said tabs (L).

5. Method according to one of Claims 1 to 4, in which in step g), before placing said upper plate (SI), a lower face, which it comprises and which is intended to be in contact with said heat pipes and/or inserts (Ci) and said separating structures (Nj), is coated with a layer of said second adhesive.

6. Method according to one of Claims 1 to 5, in which in step b), said tabs (L) are partially straightened so that they make an angle, selected to be between 15° and 45°, with the upper face of the bottom plate (SI).

7. Method according to Claim 6, in which said angle is selected to be substantially equal to 30°.

8. Method according to one of Claims 1 to 7, in which said tabs (L) are defined in said bottom plate (SI) by means of a technique selected from a group comprising at least machining, laser cutting, fluid jet cutting and stamping.

9. Method according to one of Claims 1 to 7, in which said tabs (L) are added onto the upper face of said bottom plate (SI).

10. Method according to one of Claims 2 to 9, in which in step c), an edge frame (CB) is placed on said plate having a selected planeity (MC), and said bottom plate (SI) is then placed in said edge frame (CB).

11. Method according to one of Claims 1 to 10, with a step h), after step g), in which the assembled panel (P) is passed through a furnace or an autoclave.

12. Method according to Claim 11, with a step i), after step h), in which the assembled panel (P) is stripped in order to separate it from said plate having a selected planeity (MC).

13. Method according to one of Claims 1 to 12, in which separating structures (Nj) of the honeycomb type are used.

14. Method according to one of Claims 1 to 13, in which a first adhesive of an intumescent type is used.

15. Panel having built-in heat pipe(s) and/or insert(s) (P), which is prepared using a fabrication method according to one of the preceding claims.

16. Panel according to Claim 15, which is suitable for installation on a spacecraft.

## Patentansprüche

1. Verfahren zur Herstellung von Paneelen mit integrierte(m)n Heizungsrohr(en) und/oder Einsatz (Einsätzen) (P), das darin besteht, a) eine sogenannte untere Sohle (SI) vorzusehen, die an ausgewählten Stellen, die zu beiden Seiten von Aufnahmezonen für Heizungsrohr oder Einsatz (ZCi) Zungen (L) aufweisen, die im Wesentlichen eben sind und über eine obere Fläche, die sie aufweist, aufgerichtet werden können, b) die Zungen (L) teilweise in Richtung der Aufnahmezonen (ZCi) aufzurichten, c) die Heizungsrohre und/oder Einsätze (Ci) in jeder Aufnahmezone (ZCi) zwischen den Zungen (L) und in Berührung mit der oberen Fläche der unteren Sohle (SI) zu positionieren, d) das Aufrichten der Zungen (L) derart zu beenden, dass sie gegen die seitlichen Flächen der Heizungsrohre und/oder Einsätze (Ci) gedrückt sind, e) eine ausgewählte Stärke eines ersten Klebstoffs (CE1) gegen die seitlichen Flächen der Heizungsrohre und/oder Einsätze (Ci) aufzubringen, f) Zwischenstrukturen (Nj) im Wesentlichen mit der gleichen Höhe wie die der Heizungsrohre und/oder Einsätze (Ci) zu beiden Seiten der seitlichen Flächen jedes Heizungsrohrs und/oder Einsatzes (Ci) und in Berührung mit der oberen Seite der unteren Sohle (SI) zu positionieren, und g) eine sogenannte obere Sohle (SS) oberhalb der Heizungsrohre und/oder Einsätze (Ci) und der Zwischenstrukturen (Nj) und in Berührung mit diesen Letzteren zu platzieren.

2. Verfahren nach Anspruch 1, bei dem man im Schritt c), vor dem Positionieren der Heizungsrohre und/oder der Einsätze (Ci), die untere Sohle (SI) auf einem Blech mit ausgewählter Ebenheit (MC) platziert.

3. Verfahren nach einem der Ansprüche 1 und 2, bei dem man im Schritt b) die obere Seite der unteren Sohle (SI) mit einer Schicht eines zweiten Klebstoffs (CE2) beschichtet, nachdem man die Zungen (L) teilweise aufgerichtet hat.

4. Verfahren nach einem der Ansprüche 1 und 2, bei dem man im Schritt b) die obere Seite der unteren Sohle (SI) mit einer Schicht eines zweiten Klebstoffs beschichtet, bevor man die Zungen (L) teilweise aufrichtet.

5. Verfahren nach einem der Ansprüche 1 bis 4, bei dem man im Schritt g), vor dem Platzieren der oberen Sohle (SI), eine untere Seite, die sie aufweist, und die dazu bestimmt ist, mit den Heizungsrohren und/oder Einsätzen (Ci) sowie den Zwischenstrukturen (Nj) in Berührung zu sein, mit einer Schicht des zweiten Klebstoffs beschichtet.

6. Verfahren nach einem der Ansprüche 1 bis 5, bei dem man im Schritt b) die Zungen (L) derart teilweise aufrichtet, dass sie einen Winkel zu der oberen Seite der unteren Sohle (SI) bilden, der in einem Intervall zwischen 15° und 45° ausgewählt ist.

7. Verfahren nach Anspruch 6, wobei der ausgewählte Winkel im Wesentlichen gleich 30° ist.

8. Verfahren nach einem der Ansprüche 1 bis 7, bei dem die Zungen (L) in der unteren Sohle (SI) mittels einer Technik definiert sind, die aus einer Gruppe ausgewählt ist, die mindestens das Bearbeiten, das Laserschneiden, das Schneiden mit Fluidstrahl und das Stanzen aufweist.

9. Verfahren nach einem der Ansprüche 1 bis 7, **dadurch gekennzeichnet, dass** die Zungen (L) auf der oberen Seite der unteren Sohle (SI) angebaut sind.

10. Verfahren nach einem der Ansprüche 2 bis 9, bei dem man im Schritt c) einen Randrahmen (CB) auf das Blech mit ausgewählter Ebenheit (MC) platziert und dann die untere Sohle (SI) in den Randrahmen (CB) platziert.

11. Verfahren nach einem der Ansprüche 1 bis 10 mit einem Schritt h) nach dem Schritt g), bei dem man das zusammengefügte Paneel (P) in einem Ofen oder einem Autoklav behandelt.

12. Verfahren nach Anspruch 11 mit einem Schritt i) nach dem Schritt h), bei dem man das zusammengefügte Paneel (P) abformt, um es von dem Blech mit ausgewählter Ebenheit (MC) zu trennen.

13. Verfahren nach einem der Ansprüche 1 bis 12, bei dem man Zwischenstrukturen (Nj) des Wabentyps verwendet.

14. Verfahren nach einem der Ansprüche 1 bis 13, bei dem man einen ersten Klebstoff des intumeszenten Typs verwendet.

15. Paneel mit integrierte(m)n Heizrohr(en) und/oder Einsatz (Einsätzen) (P), das mittels eines Herstellungsverfahrens nach einem der vorhergehenden Ansprüche hergestellt wird.

16. Paneel nach Anspruch 15, das auf einem Raumfahrzeug angebracht werden kann.
